Europäisches Patentamt

European Patent Office

Office européen des brevets

(19)

(11) Publication number: **0 134 723**
**B1**

(12) **EUROPEAN PATENT SPECIFICATION**

(45) Date of publication of patent specification: **29.03.89**

(21) Application number: **84306096.3**

(22) Date of filing: **06.09.84**

(51) Int. Cl.⁴: **B 68 G 3/00,** D 06 M 19/00,
A 41 G 9/00

(54) Insulating article and method of making same.

(30) Priority: **12.09.83 US 530895**
**20.07.84 US 633042**

(43) Date of publication of application:
**20.03.85 Bulletin 85/12**

(45) Publication of the grant of the patent:
**29.03.89 Bulletin 89/13**

(84) Designated Contracting States:
**AT BE CH DE FR GB IT LI NL SE**

(56) References cited:
**FR-A- 338 797**
**GB-A- 807 904**
**GB-A-1 425 212**
**US-A-2 821 456**
**US-A-2 959 793**

(73) Proprietor: **Bradley, John M.**
**Eaglehead Road**
**Manchester Massachusetts 01944 (US)**

(72) Inventor: **Bradley, John M.**
**Eaglehead Road**
**Manchester Massachusetts 01944 (US)**

(74) Representative: **Blake, John Henry Francis et al**
**BROOKES AND MARTIN High Holborn House**
**52/54 High Holborn**
**London WC1V 6SE (GB)**

Courier Press, Leamington Spa, England.

# Description

## INSULATING ARTICLE AND METHOD OF MAKING THE SAME

This invention relates to contained insulating materials for coverings and more particularly to articles such as mittens, jackets, shoes, hats, tents, sleeping bags, pillows, comforters and the like, and to the process for making same. The invention is useful for insulating any object which needs both insulation and air circulation.

Goose down and eider down are generally regarded as the best materials available for insulating coverings. This is largely because their bulk densities are extremely low, i.e. about 0.2 lbs./ft.$^3$ (3.1 kg/m$^3$), and they are sufficiently porous to allow the escape of water vapor from the surface of the body. This ability to "breathe" is an extremely important feature in the context of body coverings, because it allows the escape of perspiration which otherwise would accumulate and detract from both insulation and comfort if the covering were totally impervious. Thus, while some materials, such as closed-cell plastic foams containing high molecular weight gases entrapped in the foam cells, have greater insulating power per unit of thickness than goose or eider down, they are heavier and are not suitable for body coverings because they do not "breathe".

Goose and eider down, however, have several serious drawbacks. They are very expensive, i.e. about $24/lb ($53/kg) wholesale. Also, they totally lose effectiveness when they become wet, and, once wet, they are extremely difficult to dry. They could, of course, be packed in a totally waterproof envelope, but, if that were done, the required breathability of the covering would be lost. If the envelope were totally impermeable to water and air, it would then be impossible to pack the down-insulated envelope into a small volume when not in use. The compressibility of goose down when not in use, accompanied by recovery of loft when the pressure is released, is a very important property of goose down.

The present invention stems from the discovery by the present inventor that mixing goose down with finely divided hydrophobic particulate metal or metalloid oxide pigment in an amount substantially in excess of that required to cover the down fibers with a mono-layer of particles touching each other over the entire surface of the fibers causes, contrary to expectation, an increase in insulating power per unit of weight in a given volume. This increase in insulating power appears to be unrelated to the action of the pigment in increasing the hydrophobic character of the down.

Thus the present invention provides an insulating article comprising:

(a) a sealed permeable-to-gas envelope;

(b) insulating material substantially filling said envelope comprising a fine fibrous insulating material;

(c) finely divided hydrophobic particulate metal oxide or metalloid oxide pigment intimately admixed with said insulating material in said envelope;

(d) a substantial excess of said pigment in said envelope beyond that required substantially completely to cover all surfaces of said material with a mono-layer of said pigment particles touching each other; and

(e) said envelope adapted substantially to retain said pigment within said envelope.

The present invention also provides an insulating material composition comprising:

(a) a fine fibrous insulating material;

(b) finely divided hydrophobic particulate metal oxide or metalloid oxide pigment intimately admixed with said fibrous insulating material, said pigment being in a substantial excess of that required substantially completely to cover all surfaces of said fibrous material with a mono-layer of said pigment particles touching each other.

The present invention also provides a process for manufacturing an insulated article comprising the steps of:

(a) mixing a quantity of a fine fibrous insulating material with a finely divided hydrophobic particulate metal oxide or metalloid oxide pigment in an amount substantially in excess of the amount required to provide a monolayer of the particles of said pigment touching each other over the entire surface of the fibers of said insulating material;

(b) selecting a finely porous sheet of material the pores of which permit the passage of gas but are small enough substantially to resist the passage therethrough of said pigment;

(c) forming an envelope of said sheet material;

(d) filling said envelope with a measured quantity of the mixture; and

(e) completing the closure of said envelope.

By means of the present invention, it is possible to provide improved insulation for items such as body coverings which, at one and the same time, enjoys the insulating and breathability and compressibility advantages of goose or eider down, but substantially overcomes the disadvantages of wettability thereof. It is also possible to improve the insulating power of articles employing water fowl down without increasing the bulk density when they are being used. Additionally, the foregoing may be accomplished without increasing the discomfort of the user. Further, it is possible to provide an insulating article with the above advantages which also is adapted to be compressed when not in use.

The present invention combines these discoveries in a typical embodiment in the following way. An envelope to retain the insulation is made of a permeable, tightly woven, or tightly knitted cloth or any other water vapor permeable material which is also capable of retaining the pigment, suitably contoured for the desired article. The envelope is filled with water fowl down (or other fine fibrous insulation). Also admixed with the down is the hydrophobic pigment in quantity sufficient to cover the surface of the down completely, and, in addition, between about 3% up to 50% by weight of excess hydrophobic pigment.

An important feature of the invention is that the down is strongly protected against wetting, not only by the hydrophobic pigment on its surface, but also by the excess of pigment permeating the entire envelope and penetrating into all interstices on the inside surfaces of the envelope. Due to the woven (or similar) nature of the material of the envelope, the envelope breathes, but due to the excess of hydrophobic pigment, the down and the inside wall of the envelope are continuously recoated with pigment as the article is flexed during use, and therefore, the envelope remains resistant to the penetration of liquid water. The down also is, therefore, resistive to water penetration and absorption without interfering with the water vapor permeability of the envelope. In addition, although the envelope breathes, its weave is sufficiently close to retain the hydrophobic pigment effectively within the envelope and avoid any substantial contact between the body of the user and the pigment. Also, due to the ability of the envelope to breathe, it may be readily compressed when not in use, but yet recover its loft thereafter when the pressure is released. A further feature is that the thermal conductivity of the down treated in accordance with this invention is reduced. For example, a mixture of two parts by weight of down with one part by weight of the pigment will have 7.3% lower thermal conductivity than that of untreated down of the same weight (i.e., weight of down plus pigment) in an envelope of the same volume.

The present invention is suitable for articles such as jackets, trousers, sleeping bags, mittens, shoes, shirts, socks, coats, hats, blankets, pillows, comforters etc. It pertains primarily to the insulating material but also to the combination of the material and the envelope and can have any shape suitable for the intended end use. For this reason, it is considered that a drawing would contribute little to an understanding of the invention.

The basic component of the invention is the treated insulating material. In addition, a suitable contoured envelope is employed made of material that is permeable to water vapor but substantially impermeable to the below-described hydrophobic pigment. Preferably, it is made of tightly woven or tightly knitted natural or synthetic yarns or a combination of them, or, in areas such as the palms of mittens where a higher coefficient of friction is desirable, leather serves the purpose. Portions of the envelope may be totally impervious. The envelope is filled with fine fibrous insulating material such as goose down (or downs of swan, duck, chicken or other fine insulating fibers) together with between about 5% to 50% by weight of a finely divided hydrophobic particulate metal oxide or metalloid oxide pigment in excess of the amount of pigment required to cover all surfaces of said insulating material with a monolayer of said pigment particles touching each other.

The pigment may be such as the submicron amorphous hydrophobic silica pigment sold by the Cabot Corporation under the trade mark "Cab-O-Sil N70-TS". Another suitable metalloid oxide pigment is the hydrophobic silica formerly sold by the Cabot Corporation under the trade mark "Silanox". Still another is the hydrophobic silica sold by Tulco, Inc. under the trade mark "Tulanox". A further suitable silica pigment is sold by Degussa under the trade mark "Aerosil R972". Other metal oxide (e.g. alumina or iron oxide) and metalloid oxide (e.g., germanium) finely divided pigments treated to render them highly hydrophobic may also be employed including, for example, an alumina sold by Degussa under the trade mark "Alon-C" and after treated to render it highly hydrophobic, which after treatment can be chemical as by heating in the presence of substances which form hydrophobic surface methyl groups on the pigment, or by intimate mechanical admixture of hydrophobic substances such as parafin. The preferred hydrophobic pigment providing maximum performance according to the present invention is the Cab-O-Sil N70-TS mentioned above.

Other fine insulating fibers may include a fine fibrous polyethylene sold by 3M under the trade mark "Thinsulate".

The mixing of the pigment and the down (or other insulating fiber) is done by placing them together in a container and tumbling them.

Since less than 1% by weight of the hydrophobic pigment is theoretically required to cover the surface of the down, there is a considerable excess of it in the envelope. This excess strongly protects both the envelope and the down from water penetration and absorption while at the same time increasing the insulating value of the down, but not imparing the breathability of the envelope, or increasing the bulk density of the insulation. Further, even if water happens to penetrate into the envelope despite the protection of the hydrophobic material, the down can be dried out thereafter much more readily than the untreated down. In addition, the composite article can be laundered repetitively and still retain significant resistance to water penetration and absorption.

It has also been found that a thermal insulation test specimen made in accordance with this invention and containing 33% by weight of pigment has 7.3% more insulating power than an untreated goose down filled specimen having the same density and weight per unit area of insulation. This is contrary to expectation because untreated goose down (and eider down) have always been considered to have higher thermal insulating power for a given weight than any other material.

The invention is highly significant economically because it provides better insulation and water repellency at lower cost. For example, the cost of Cab-O-Sil N70-TS is around $4/lb ($9/kg), whereas the down costs around $24/lb ($53/kg). Thus, one pound (0.45 kg) of treated down (67% by wt. down and 33% by wt. pigment) having a 7.3% better insulating power than one pound (0.45 kg) of untreated down, will cost only $17.40, a saving of 27.5% of the cost of down (disregarding the cost of mixing the down and pigment). In addition, since the treated down has substantially greater insulating power even when wet than untreated down, the extra expense of materials for rendering the envelopes waterproof (yet water vapor permeable) such as "Gortex" may be avoided by using down treated according to the present invention.

The form of fumed silica pigment which has been coated with silicone treating fluid to provide polymethylsilyl groups on the surface thereof, i.e. Cab-O-Sil N70-TS, is preferred because it is less dusty, and disperses more easily than other conventional hydrophobic fumed silica pigments. However, other forms of finely divided hydrophobic particulate metal oxide or metalloid oxide pigments in amount substantially in excess of that required to cover the fibers will work and fall within the broad scope of the invention. Having described a preferred embodiment, it will now be apparent to those skilled in the art that various modifications can be made. For example, the fibrous insulating material can be other types of feathers and other fine fibers. It is, therefore, not intended to confine the invention to the precise form described herein, but rather to limit the scope only by the terms of the appended claims.

**Claims**

1. An insulating article comprising:
(a) a sealed permeable-to-gas envelope;
(b) insulating material substantially filling said envelope comprising a fine fibrous insulating material;
(c) finely divided hydrophobic particulate metal oxide or metalloid oxide pigment intimately admixed with said insulating material in said envelope;
(d) a substantial excess of said pigment in said envelope beyond that required substantially completely to cover all surfaces of said material with a mono-layer of said pigment particles touching each other; and
(e) said envelope adapted substantially to retain said pigment within said envelope.

2. An article according to claim 1, further characterized by:
a substantial portion only of said envelope of element (a) comprising a porous material suitable for the passage of water vapour and gas but not the passage of said pigment.

3. An article according to claim 1 or 2, further characterized by:
said insulating material of element (b) being selected from goose, swan, duck, and chicken down.

4. An article according to claim 1, 2 or 3, further characterized by:
said pigment of element (c) comprising a submicron fumed silica pigment treated to render it highly hydrophobic.

5. An article according to claim 4 further characterized by:
the pigment of element (c) comprising a fumed silica treated with a silicone fluid to form polymethylesilyl groups on the surface of said silica.

6. An article according to any preceding claim, further characterised by:
the excess of pigment of element (d) being between about 5% and 50% by weight of the fibrous insulating material.

7. A process for manufacturing an insulated article comprising the steps of:
(a) mixing a quantity of a fine fibrous insulating material with a finely divided hydrophobic particulate metal oxide or metalloid oxide pigment in an amount substantially in excess of the amount required to provide a monolayer of the particles of said pigment touching each other over the entire surface of the fibers of said insulating material;
(b) selecting a finely porous sheet of material the pores of which permit the passage of gas but are small enough substantially to resist the passage therethrough of said pigment;
(c) forming an envelope of said sheet material;
(d) filling said envelope with a measured quantity of the mixture; and
(e) completing the closure of said envelope.

8. A process according to claim 7 further characterized by:
the fibrous insulating material being selected from down and feathers.

9. A process according to claim 7 further characterized by:
the pigment comprising a fumed silica after treated to render it hydrophobic.

10. An insulating material composition comprising:
(a) a fine fibrous insulating material;
(b) finely divided hydrophobic particulate metal oxide or metalloid oxide pigment intimately admixed with said fibrous insulating material, said pigment being in a substantial excess of that required substantially completely to cover all surfaces of said fibrous material with a mono-layer of said pigment particles touching each other.

**Patentansprüche**

1. Isolierender Artikel, der umfaßt:
a) eine verschlossene gasdurchlässige Hülle;
b) im wesentlichen die Hülle füllendes Isoliermaterial, das ein feines faseriges Isoliermaterial umfaßt;
c) fein zerteiltes hydrophobes aus Partikeln bestehendes Metalloxid- oder Metalloidoxidpigment, das mit dem Insoliermaterial in der Hülle eng vermischt ist;
d) ein wesentlicher Überschuß an dem Pigment in der Hülle über das hinaus, was im wesentlichen vollständig erforderlich ist, um alle Oberflächen des Materials mit einer Monoschicht der sich gegenseitig berührenden Pigmentpartikel zu bedecken; und

e) die Hülle im wesentlichen so angepaßt ist, daß sie das Pigment innerhalb der Hülle zurückhält.

2. Artikel nach Anspruch 1, weiter dadurch gekennzeichnet, daß ein wesentlicher Teil nur der Hülle des Elements a) ein poröses Material, das für den Durchgang von Wasserdampf und Gas aber nicht für den Durchgang des Pigments geeignet ist, aufweist.

3. Artikel nach Anspruch 1 oder 2, weiter dadurch gekennzeichnet, daß das Isoliermaterial des Elements b) aus Gänse-, Schwanen-, Enten- und Hühnerdaunen ausgewählt ist.

4. Artikel nach Anspruch 1, 2 oder 3, weiter dadurch gekennzeichnet, daß das Pigment des Elements c) ein Submikron abgerauchtes Silikapigment, das so behandelt ist, daß es in höchstem Maße hydrophob ist, aufweist.

5. Artikel nach Anspruch 4, weiter dadurch gekennzeichnet, daß das Pigment des Elements c) ein mit einer Silikonflüssigkeit behandeltes abgerauchtes Silika zur Bildung von Polymethylsilylgruppen auf der Oberfläche des Silikas aufweist.

6. Artikel nach einem der vorhergehenden Ansprüche, weiter dadurch gekennzeichnet, daß der Überschuß des Pigments des Elements d) zwischen ungefähr 5 und 50 Gew.-% des faserigen Isoliermaterials beträgt.

7. Verfahren zur Herstellung eines isolierenden Artikels, das folgende Schritte umfaßt:

a) Vermischen einer Menge eines feinen faserigen Isoliermaterials mit einem fein zerteilten hydrophoben aus Partikeln bestehenden Metalloxid- oder Metalloidoxidpigment in einer Menge, die im wesentlichen zu jener Menge im Überschuß steht, die erforderlich ist, um eine Monoschicht der sich berührenden Pigmentpartikel über die gesamte Oberfläche der Fasern des Isoliermaterials vorzusehen;

b) Auswählen eines fein porösen Materialblattes, dessen Poren den Durchgang von Gas ermöglichen, jedoch ausreichend klein sind, um den Durchgang des Pigments durch dieses im wesentlichen zu unterbinden;

c) Bilden einer Hülle aus dem Materialblatt;

d) Füllen der Hülle mit einer gemessenen Menge des Gemisches; und

e) Verschließen der Hülle.

8. Verfahren nach Anspruch 7, weiter dadurch gekennzeichnet, daß das faserige Isoliermaterial aus Daunen und Federn ausgewählt ist.

9. Verfahren nach Anspruch 7, weiter dadurch gekennzeichnet, daß das Pigment ein abgerauchtes Silika aufweist, das nachbehandelt worden ist, um es hydrophob zu machen.

10. Isoliermaterialzusammensetzung, die umfaßt:

a) ein feines faseriges Isoliermaterial;

b) ein fein zerteiltes hydrophobes aus Partikeln bestehendes Metalloxid- oder Metalloidoxidpigment, das mit dem faserigen Isoliermaterial eng vermischt ist, wobei das Pigment in einem wesentlichen Überschuß über der Menge vorliegt, die im wesentlichen vollständig erforderlich ist, um alle Oberflächen des faserigen Materials mit einer Monoschicht der einander berührenden Partikelteilchen zu bedecken.

## Revendications

1. Article isolant comprenant:

(a) une enveloppe fermée perméable aux gaz;

(b) un matériau isolant remplissant sensiblement ladite enveloppe et constitué par une matière isolante fibreuse fine.

(c) un pigment hydrophobe finement divisé en particules d'oxyde métallique ou d'oxyde de métalloïde mélangé intimement avec ladite matière isolante dans ladite enveloppe;

(d) un excès notable dudit pigment dans ladite enveloppe en plus de celui nécessaire pour recouvrir sensiblement complètement toutes les surfaces de ladite matière d'une monocouche desdites particules de pigment se touchant les unes les autres; et

(e) ladite enveloppe étant adaptée pour retenir essentiellement ledit pigment à l'intérieur de ladite enveloppe.

2. Article suivant la revendication 1, caractérisé en outre en ce que seulement une partie notable de ladite enveloppe de l'élément (a) est constituée par un matériau poreux convenant pour le passage de vapeur d'eau et de gaz, mais non pas pour le passage dudit pigment.

3. Article suivant la revendication 1 ou 2, caractérisé en outre en ce que ledit matériau isolant de l'élément (b) est choisi parmi les duvets d'oie, de cygne, de canard et de poulet.

4. Article suivant l'une des revendications 1, 2 ou 3, caractérisé en outre en ce que ledit pigment de l'élément (c) est constitué par un pigment de silice fumée de dimension inférieure au micron, traité pour le rendre hautement hydrophobe.

5. Article suivant la revendication 4, caractérisé en outre en ce que le pigment de l'élément (c) est constitué par de la silice fumée traitée avec un fluide silicone pour former des groupes polyméthyle-silyle sur la surface de ladite silice.

6. Article suivant l'une quelconque des revendications précédentes, caractérisé en outre en ce que l'excès de pigment de l'élément (d) est compris entre environ 5% et 50% en poids de la matière isolante fibreuse.

7. Procédé de fabrication d'un article isolé, comprenant les phases suivantes:

(a) on mélange une quantité d'une matière isolante fibreuse fine avec un pigment hydrophobe finement divisé en particules d'oxyde métallique ou d'oxyde de métalloïde en une quantité qui excède notablement la quantité nécessaire pour réaliser une mono-couche de particules dudit pigment se touchant les unes les autres sur la totalité de la surface des fibres de ladite matière isolante;

(b) on choisit une feuille d'une matière finement poreuse, dont les pores permettent le passage des gaz, mais sont suffisamment petits pour résister à peu près au passage du pigment à travers eux;

(c) on forme une enveloppe en ladite feuille de matière;

(d) on remplit ladite enveloppe d'une quantité mesurée du mélange; et

(e) on termine la fermeture de ladite enveloppe. 8. Procédé suivant la revendication 7, caractérisé en ce que la matière isolante fibreuse est choisie parmi les duvets et les plumes.

9. Procédé suivant la revendication 7, caractérisé en ce que le pigment est constitué par de la silice fumée re-traitée pour la rendre hydrophobe.

10. Composition de matière isolante comprenant:

(a) une matière isolante fibreuse fine;

(b) un pigment hydrophobe finement divisé en particules d'oxyde métallique ou d'oxyde de métalloïde intimement mélangé avec ladite matière isolante fibreuse, ledit pigment étant en excédent notable par rapport à ce qui est nécessaire pour couvrir à peu près complètement toutes les surfaces de ladite matière fibreuse d'une mono-couche desdites particules de pigment se touchant les unes les autres.